(19)

**Europäisches Patentamt**
**European Patent Office**
**Office européen des brevets**

(11) **EP 1 654 722 B1**

(12) **EUROPEAN PATENT SPECIFICATION**

(45) Date of publication and mention
of the grant of the patent:
**14.12.2016 Bulletin 2016/50**

(51) Int Cl.:
***G09G 3/36*** (2006.01)

(21) Application number: **04734593.9**

(86) International application number:
**PCT/IL2004/000446**

(22) Date of filing: **24.05.2004**

(87) International publication number:
**WO 2004/107025 (09.12.2004 Gazette 2004/50)**

(54) **MULTI-PRIMARY DISPLAY WITH SPECTRALLY ADAPTED BACK-ILLUMINATION**

MEHRFACH-PRIMÄR-DISPLAY MIT SPEKTRAL ANGEPASSTER RÜCKBELEUCHTUNG

AFFICHAGE MULTI-COULEURS PRIMAIRES A RETROECLAIRAGE A ADAPTATION SPECTRALE

(84) Designated Contracting States:
**AT BE BG CH CY CZ DE DK EE ES FI FR GB GR HU IE IT LI LU MC NL PL PT RO SE SI SK TR**

(30) Priority: **27.05.2003 US 473135 P**

(43) Date of publication of application:
**10.05.2006 Bulletin 2006/19**

(73) Proprietor: **Samsung Display Co., Ltd.**
**Gyeonggi-do (KR)**

(72) Inventor: **ROTH, Shmuel**
**49550 Petach Tikva (IL)**

(74) Representative: **Pearl Cohen Zedek Latzer Baratz UK LLP**
**16 Upper Woburn Place**
**London WC1H 0BS (GB)**

(56) References cited:
**WO-A-02/099557          WO-A1-02/080136**
**WO-A2-01/95544          WO-A2-02/101644**
**US-A- 6 147 720          US-A1- 2002 070 914**
**US-A1- 2003 063 062**

**Description**

FIELD OF THE INVENTION

The invention relates generally to color display devices, systems and methods and, more particularly, to display devices, systems and methods having improved color image reproduction capability.

BACKGROUND OF THE INVENTION

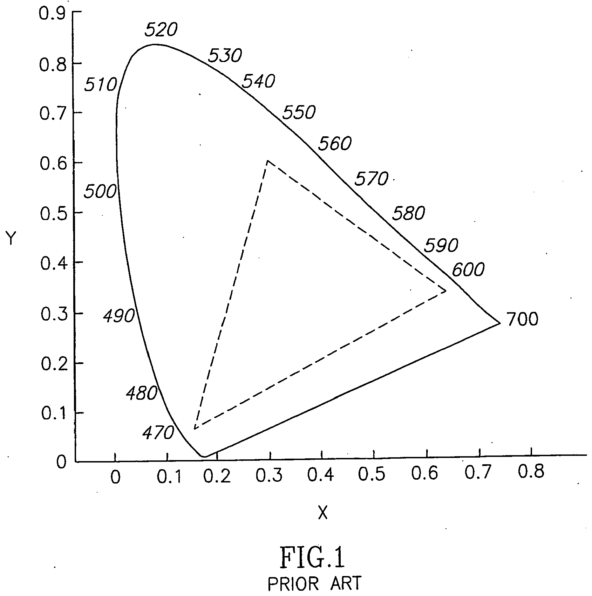

Standard computer monitors and TV displays are typically based on reproduction of three, additive, primary colors ("primaries"), for example, red, green, and blue, collectively referred to as RGB. Unfortunately, these monitors cannot display many colors perceived by humans, since they are limited in the range of color they are capable of displaying. Fig. 1 schematically illustrates a chromaticity diagram as is known in the art. The closed area in the shape of a horseshoe represents the chromaticity range of colors that can be seen by humans. However, chromaticity alone does not fully represent all visible color variations. For example, each chromaticity value on the two-dimensional chromaticity plane of Fig. 1 may be reproduced at various different brightness levels. Thus, a full representation of the visible color space requires a three dimensional space including, for example, two coordinates representing chromaticity and a third coordinate representing brightness. Other three dimensional space representations may also be defined. The points at the border of the horseshoe diagram in Fig. 1, commonly referred to as "spectrum locus", correspond to monochromatic excitations at wavelengths ranging, for example, from 400 nm to 780 nm. The straight line "closing" the bottom of the horseshoe, between the extreme monochromatic excitation at the longest and shortest wavelengths, is commonly referred to as "the purple line". The range of colors discernible by the human eye, represented by the area of the horseshoe diagram above the purple line, at varying brightness levels, is commonly referred to as the color gamut of the eye. The dotted triangular area of Fig. 1 represents the range of colors that are reproducible by a standard RGB monitor.

There are many known types of RGB monitors, using various display technologies, including but not limited to CRT, Light Emitting Diode (LED), plasma, projection displays, LCD devices and others. Over the past few years, the use of color LCD devices has been increasing steadily. A typical color LCD device as disclosed in international Application WO 02/101644 A2is schematically illustrated in Fig. 2A. Such a device includes a light source 202, an array of liquid crystal (LC) elements (cells) 204, for example, an LC array using Thin Film Transistor (TFT) active-matrix technology, as is known in the art. The device further includes electronic circuits 210 for driving the LC array cells, e.g., by active-matrix addressing, as is known in the art, and a tri-color filter array, e.g., a RGB filter array 206, juxtaposed the LC array. In existing LCD devices, each full-color pixel of the displayed image is reproduced by three sub-pixels, each sub-pixel corresponding to a different primary color, e.g., each pixel is reproduced by driving a respective set of R, G and B sub-pixels. For each sub-pixel there is a corresponding cell in the LC array. Back-illumination source 202 provides the light needed to produce the color images. The transmittance of each of the sub-pixels is controlled by the voltage applied to the corresponding LC cell, based on the RGB data input for the corresponding pixel. A controller 208 receives the input RGB data, scales it to the required size and resolution, and transmits data representing the magnitude of the signal to be delivered by the different drivers based on the input data for each pixel. The intensity of white light provided by the back-illumination source is spatially modulated by the LC array, selectively attenuating the light for each sub pixel according to the desired intensity of the sub-pixel. The selectively attenuated light passes through the RGB color filter array, wherein each LC cell is in registry with a corresponding color sub-pixel, producing the desired color sub-pixel combinations. The human vision system spatially integrates the light filtered through the different color sub-pixels to perceive a color image.

LCDs are used in various applications. LCDs are particularly common in portable devices, for example, the small size displays of PDA devices, game consoles and mobile telephones, and the medium size displays of laptop ("notebook") computers. These applications require thin and miniaturized designs and low power consumption. However, LCD technology is also used in non-portable devices, generally requiring larger display sizes, for example, desktop computer displays and TV sets. Different LCD applications may require different LCD designs to achieve optimal results. The more "traditional" markets for LCD devices, e.g., the markets of battery-operated devices (e.g., PDA, cellular phones and laptop computers) require LCDs with high brightness efficiency, which leads to reduced power consumption. In desktop computer displays, high resolution, image quality and color richness are the primary considerations, and low power consumption is only a secondary consideration. Laptop computer displays require both high resolution and low power consumption; however, picture quality and color richness are compromised in many such devices. In TV display applications, picture quality and color richness are generally the most important considerations; power consumption and high resolution are secondary considerations in such devices.

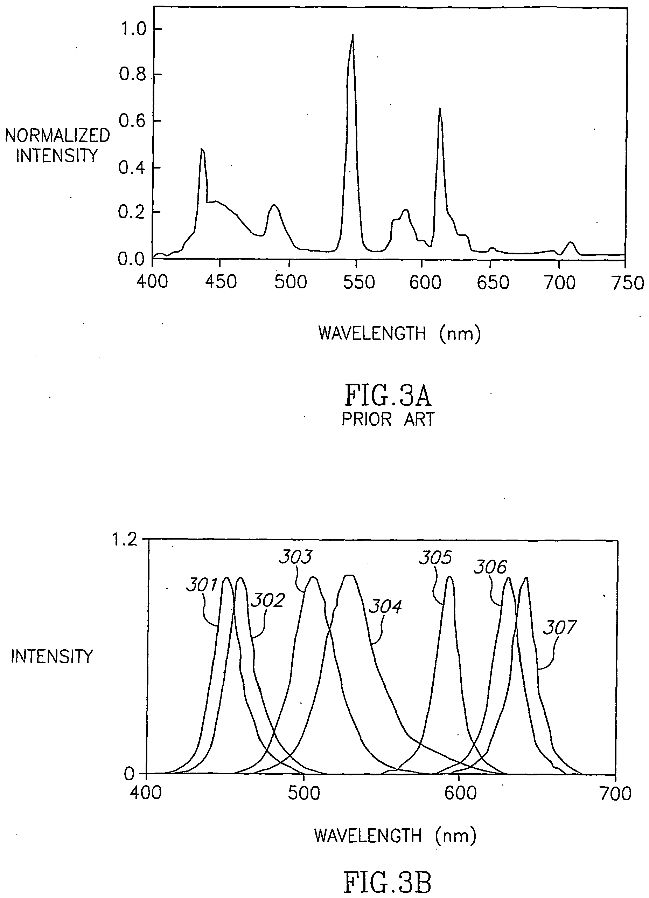

Typically, the light source providing back-illumination to LCD devices is a Cold Cathode Fluorescent Light (CCFL). Fig. 3A schematically illustrates typical spectra of a CCFL, as is known in the art. As illustrated in Fig. 3A, the light source spectra include three, relatively narrow, dominant wavelength ranges, corresponding to red, green and blue light, respectively. Other suitable light sources, as are known in the art, may alternatively be used. The RGB filters in the filter sub-pixel array may be designed to reproduced a wide color gamut (e.g., as close as possible to the color gamut of a corresponding CRT monitor), but also to maximize the display efficiency, e.g., by selecting filters whose transmission curves generally overlap the CCFL spectra peaks in Fig. 3A. In general, for a given source brightness, filters with narrower transmission spectra provide a wider color gamut but a reduced display brightness, and vice versa. For example, in applications where power efficiency is a critical consideration, color gamut width may often be sacrificed. In certain TV applications, brightness is an important consideration; however, dull colors are not acceptable.

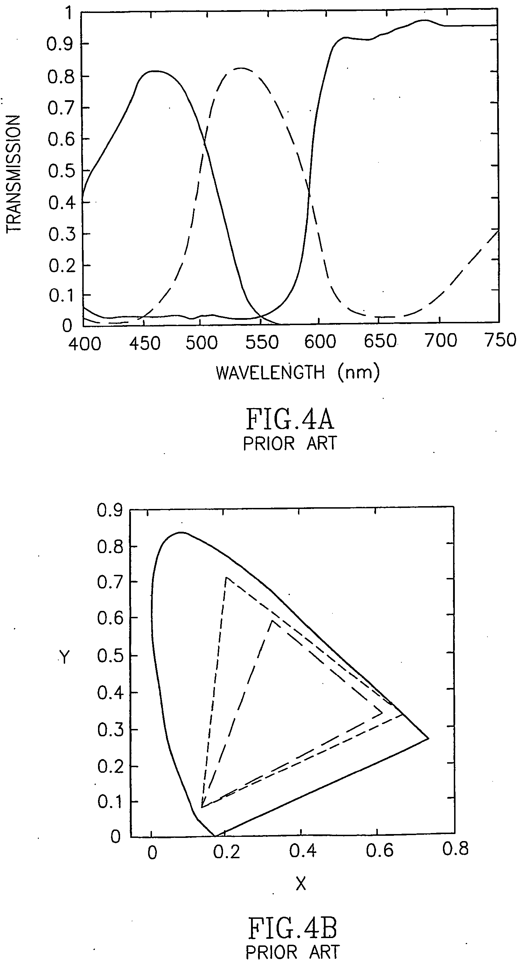

Fig. 4A schematically illustrates typical RGB filter spectra of existing laptop computer displays. Fig. 4B schematically illustrates a chromaticity diagram representing the reproducible color gamut of the typical laptop spectra (dashed-triangular area in Fig. 4B), as compared with an ideal NTSC color gamut (dotted triangular area in Fig. 4B). As shown in Fig. 4B, the NTSC color gamut is significantly wider than the color gamut of the typical laptop computer display and therefore, many color combinations included in the NTSC gamut are not reproducible by the typical color laptop computer display.

A LCD display using three color LED backlighting is described in *"High performance LCD backlighting using high intensity red, green and blue light emitting diodes"* by G. Harbers and C. Hoelen, SID Digest, LP-2, page 702 (2001).

## SUMMARY OF EMBODIMENTS OF THE INVENTION

Many colors seen by humans are not discernible on standard red-green-blue (RGB) monitors. By using a display device with more than three primary colors, the reproducible color gamut of the display is expanded. Additionally or alternatively, the brightness level produced by the display may be significantly increased. Embodiments of the present invention provide systems and methods of displaying color images on a display device, for example, a thin profile display device, such as a liquid crystal display (LCD) device, using more than three primary colors.

Exemplary embodiments of the invention provide improved multi-primary display devices using more than three sub-pixels of different colors to create each pixel.

In one aspect there is provided in the following a device and a method for displaying a color image. The device comprises an illumination source; an array of attenuating elements, each able to selectively attenuate the light produced by said illumination source according to an attenuation pattern corresponding to a gray-level representation of said color image; and an array of color sub-pixel filter elements able to receive selectively attenuated light from said array of attenuating elements, each sub-pixel filter element able to transmit light of one of n different primary colors, wherein n is equal to or greater than four;

characterized in that the illumination source comprises a plurality of light-emitting diodes (LEDs) including LEDs of m different wavelength spectra, each LED is able to produce respective light of one of said m different wavelength spectra, wherein m is equal to or greater than three, said LEDs produce light substantially simultaneously, and at least one of said n primary colors is reproducible by a combination of two or more of said m wavelength spectra, and at least one of said sub-pixel filter elements is able to fully transmit substantially the entire spectrum of said two or more of said m wavelength spectra, and wherein m is different from n.

According to some embodiments of the invention the number of different color LEDs, m, may be higher than the number of primary colors, n. Thus, embodiments of the invention enable reproduction of any desired primary color, for example, a certain shade of blue, which may not be readily reproduced by a single LED, for example, due to unavailability or inefficiency of LEDs of certain wavelengths.

In embodiments of this aspect of the invention, the use of a back-illumination source including an array of at least four light producing elements, e. g., Light Emitting Diodes (LEDs), having at least four different colors, and the use of four or more different color sub-pixels, per pixel, allows for a wider color gamut and/or higher luminous efficiency.

In some embodiments, the number and/or spectra of the LEDs, the number of sub-pixels per pixel, and/or the color spectra of the different sub-pixels may be optimized to obtain a desired combination of a sufficiently wide color gamut and/or sufficiently high brightness.

In some embodiments of the invention, the use of more than three primary colors may expand the reproducible color gamut of the display by enabling the use of relatively narrow wavelength ranges for some of the primary colors, e. g., red, green and blue, thus increasing the saturation of those primary colors. To compensate for a potentially reduced brightness level from such narrower ranges, in some embodiments of the invention, broad wavelength range primary colors, e. g. , specifically designed yellow and/or cyan, may be used in addition to the narrow wavelength range colors, thus increasing the overall brightness of the display.

According to embodiments of the invention, the light emitted by each single LED in the LED array may have a pre-defined, narrow, wavelength spectrum corresponding to a desired color. For example, in some exemplary embodiments of the invention, different LEDs in the LED array may emit two spectra of blue, a cyan spectrum, a green spectrum, a yellow spectrum, and two red spectra. According to some embodiments of the invention, a combination of LEDs having different wavelength spectra may be used to produce any desired wavelength spectral combination. A wavelength spectra combination provided by a combination of LEDs in accordance with embodiments of the invention may span a wider range of relevant colors compared to the light spectrum provided by a Cold Cathode Fluorescent Light (CCFL). Further, the wavelength spectral combination provided by a combination of LEDs according to embodiments of the invention may yield improved separation of wavelengths compared to the light spectrum provided by a CCFL. Using a LED array according to embodiments of the invention as a back-illumination source may enable reproduction of colors corresponding to a set of pre-selected narrow wavelength spectra. Therefore, when used in conjunction with appropriate color filer combinations, as described below, the LED back-illumination according to embodiments of the invention may enable more refined control in reproducing a desired color gamut and/or brightness levels.

The color gamut and other attributes of a more-than-three primary color LCD device in accordance with embodiments of the invention may be controlled by controlling the combination of the LEDs back-illumination as well as the spectral transmission characteristics of the different primary color sub-pixel filter elements used by the device. Selection of LED combinations and primary color sub-pixel filter elements for a more-than-three primary color LCD device in accordance with the invention may be based on various criteria, for example, establishing sufficient coverage of a desired color gamut, maximizing the brightness level that may be produced by the display, and/or adjusting the relative intensities of the primary colors according to a desired chromaticity standard.

BRIEF DESCRIPTION OF THE DRAWINGS

The subject matter regarded as the invention is particularly pointed out and distinctly claimed in the concluding portion of the specification. The invention, however, both as to organization and method of operation, together with objects, features and advantages thereof, may best be understood by reference to the following detailed description when read with the accompanied drawings in which:

Fig. 1 is a schematic illustration of a chromaticity diagram representing a prior art RGB color gamut, superimposed with a chromaticity diagram of the color gamut of a human vision system, as is known in the art;

Fig. 2A is a schematic block diagram illustrating a prior art 3-primary LCD system;

Fig. 2B is a schematic block diagram illustrating an n-primary LCD system with Light Emitting Diode (LED) back-illumination in accordance with an embodiment of the invention;

Fig. 3A is a schematic graph illustrating typical spectra of a prior art Cold Cathode Fluorescent Light (CCFL) source;

Fig. 3B is a schematic graph illustrating normalized spectra of a set of seven LEDs which may be used as a back-illumination source, in accordance with exemplary embodiments of the invention;

Fig. 3C is a schematic graph illustrating transmission curves of a six-primary filter array, in accordance with an exemplary embodiment of the invention;

Fig. 4A is a schematic graph illustrating a typical RGB filter spectra of a prior art laptop computer display;

Fig. 4B is a schematic illustration of a chromaticity diagram representing the color gamut reproduced by the RGB filter spectra of Fig. 4A, superimposed with an ideal prior art NTSC color gamut;

Fig. 5 is a schematic block-diagram illustration of a method for selecting a LED array and filter array, in accordance with exemplary embodiments of the invention;

Fig. 6A is a schematic graph illustrating a spectrum of a prior art back-illumination source including a LED combination of a blue LED, a green LED and a red LED;

Fig. 6B is a schematic illustration of a chromaticity diagram representing a color gamut reproduced by the LED combination of Fig. 6A;

Fig. 7A is a schematic graph illustrating a spectrum of a back-illumination source including a LED combination of six LEDs in accordance with exemplary embodiments of the invention.

Fig. 7B is a schematic graph illustrating transmission curves of a filter array used in conjunction with the LED combination of Fig. 7A to provide a five-primary display, in accordance with an exemplary embodiment of the invention;

Fig. 7C is a schematically graph illustrating a sub-pixel spectrum of five RGBCY primaries obtained by the LED combination of Fig. 7A in conjunction with the filter array of Fig. 7B; and

Fig. 7D is a schematic illustration of a chromaticity diagram representing the color gamut reproduced by the LED combination of Fig. 7A in conjunction with the filter array of Fig. 7B.

It will be appreciated that for simplicity and clarity of illustration, elements shown in the drawings have not necessarily been drawn accurately or to scale. For example, the dimensions of some of the elements may be exaggerated relative to other elements for clarity or several physical components included in one functional block or element. Further, where considered appropriate, reference numerals may be repeated among the drawings to indicate corresponding or analogous elements. Moreover, some of the blocks depicted in the drawings may be combined into a single function.

DETAILED DESCRIPTION OF EMBODIMENTS OF THE INVENTION

In the following description, various aspects of the invention are described, with reference to specific embodiments that provide a thorough understanding of the invention; however, it will be apparent to one skilled in the art that the present invention is not limited to the specific embodiments and examples described herein. Further, to the extent that certain details of the devices, systems and methods described herein are related to known aspects of color display devices, systems and methods, such details may have been omitted or simplified for clarity.

Embodiments of monitors and display devices with more than three primaries, in accordance with exemplary embodiments of the invention, are described in International Application PCT/IL02/00452, filed June 11, 2002, entitled "Device, System and Method For Color Display" and published December 19, 2002 as PCT Publication WO02/101644, and in International Application PCT/IL03/00307, filed April 13, 2003, entitled "Color Display Devices and Methods with Enhanced Attributes", and published October 23, 2003 as PCT publication WO03/088203, the disclosures of all of which applications and publications are incorporated herein by reference.

While, in embodiments of the present invention, methods and systems disclosed in the above referenced patent applications may be used, for example, methods of converting source data to primary data, or methods of creating primary color materials or filters; in alternate embodiments, the system and method of the present invention may be used with any other suitable n-primary display technology using m light-producing element, e.g., Light Emitting Diodes (LEDs), as a back-illumination source, wherein n is equal to or greater than four and m is equal to or greater than three. Certain embodiments described in these applications are based on rear or front projection devices, LCD devices, or other types of display devices. While the following description focuses mainly on n-primaries flat panel display devices using an array of LEDs as a back-illumination source in accordance with exemplary embodiments of the invention, it should be appreciated that, in alternate embodiments, the systems, methods and devices of the present invention may also be used in conjunction with other types of display and modulation techniques. For example, the systems, methods and/or devices of the present invention may be used in conjunction with n-primary projection display devices, e.g., as described in International Application PCT/IL01/00527, filed June 7, 2001, entitled "Device, System and Method For Electronic True Color Display", and published as PCT publication WO 01/95544.

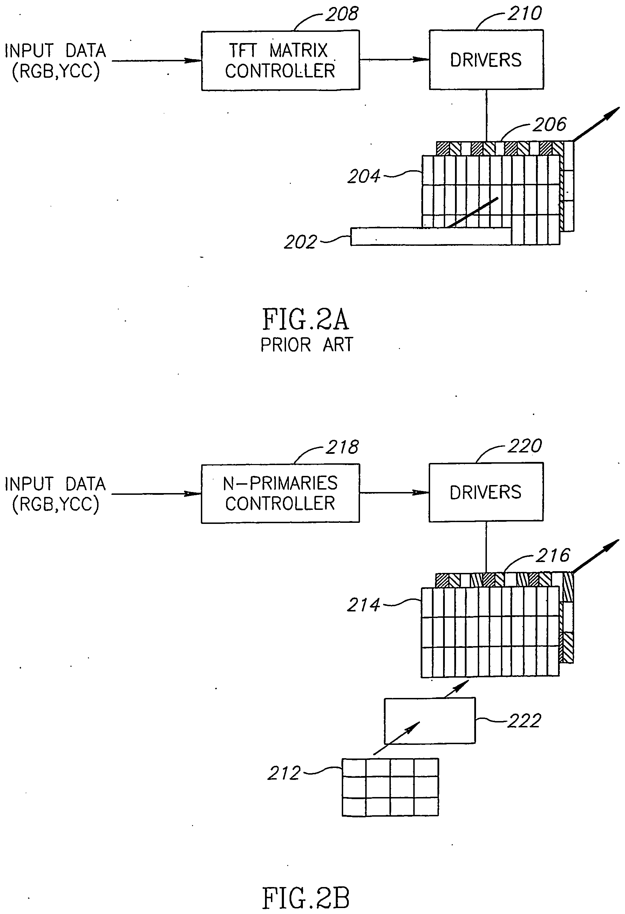

Fig. 2B schematically illustrates a more-than-three primary color display system in accordance with an embodiment of the invention. The system may include a back-illumination source including an array of light-producing elements, e.g., LEDs 212 including a LED combination of m different color LEDs, wherein m is equal to or greater than three. The system may additionally include a light-guiding optics unit 222, which may include, for example, a diffuser and/or one or more optical elements, e.g., light-guides, lenses and/or mirrors, or any other element to provide uniform back-illumination from LEDs 212, as is known in the art. According to some exemplary embodiments of the invention, LEDs may be activated simultaneously to produce aggregated light including m different wavelength spectra, as described below. The system may also include an array of liquid crystal (LC) elements (cells) 214, for example, an LC array using Thin Film Transistor (TFT) active-matrix technology, as is known in the art. The device further includes electronic circuits 220 for driving the LC array cells, e.g., by active-matrix addressing, as is known in the art, and an n-primary color filter array 216, including n different color sub-pixel filters, wherein n is greater than three, juxtaposed the LC array.

In some embodiments of the invention, the number of different color LEDs, m, may be equal to the number of primary colors, n. In these embodiments, each of the m color LEDs and a corresponding color sub-pixel filter element may have the same narrow spectrum, which may substantially correspond to one of the n primary colors, as described below.

In other embodiments of the invention, the number of different color LEDs, m, may be greater than the number of primary colors, n. According to these embodiments, two or more different color LEDs may be utilized to provide an aggregated illumination corresponding to one primary color. This may provide back-illumination effectively equivalent to a desired primary color, for example, a specific shade of blue, whose wavelength range may not be readily produced by a single type of LED, for example, due to unavailability or inefficiency of LEDs of certain wavelengths. In these embodiments, the narrow emission spectra of two or more of the m color LEDs, which may cover slightly different ranges in spectra vicinity of the desired primary color, may all be included in the transmission spectrum of one of the n color filters, as described below.

In exemplary embodiments of the LCD devices of the invention, each full-color pixel of the displayed image is reproduced by more than three sub-pixels, each sub-pixel corresponding to a different primary color, e.g., each pixel is reproduced by driving a corresponding set of four or more sub-pixels. For each sub-pixel there is a corresponding cell in LC array 214. LED array 212 provides the light needed to produce the color images. Light-guiding optics unit 222 combines and conforms the different light spectrums emitted by each of the LEDs of LED array 212 to provide substantially uniform, substantially white-light, aggregated illumination on LC array 214, in accordance with the combined spectra of LEDS 212. The LEDs may be arranged in the LED array in an arrangement that provides a substantially uniform color distribution, and an aggregated light having a substantially uniform degree of brightness. For example, the LEDs may be arranged in an arrangement that minimizes the variance in distance between each color LED and the closest LEDs of all other colors. The transmittance of each of the sub-pixels is controlled by the voltage applied to a corresponding LC cell of array 214, based on the image data input for the corresponding pixel. An n-primaries controller 218 receives the input data, e.g., in RGB or YCC format, optionally scales the data to a desired size and resolution, and transmits data representing the magnitude of the signals to be delivered by the different drivers based on the input data for each pixel. The intensity of the aggregated perceived-white illumination provided by light-guiding optics unit 222 may be spatially modulated by elements of the LC array, which selectively controls the illumination of each sub-pixel according to the image data for the sub-pixel. The selectively attenuated light of each sub-pixel passes through a corresponding color filter of color filter array 216, thereby producing desired color sub-pixel combinations. The human vision system spatially integrates the light filtered through the different color sub-pixels to perceive a color image.

The color gamut and other attributes of LCD devices in accordance with embodiments of the invention may be controlled by a number of parameters. These parameters may include the spectra and efficiency of LEDs 212, the spectral transmission of the LC cells in the LC array, and the spectral transmission of the color filters. According to embodiments of the invention, LEDs 212 and/or color filters 216 may be selected to provide a desired level of each of these parameters, as described below.

Fig. 3B is a schematic illustrates a graph of normalized spectra of a set of seven LEDs, for example, the Luxeon™ Emitter Blue, Royal Blue, Cyan, Green, Amber, Red-Orange and Red LEDs, available from Lumileds Lighting Ltd, USA, in accordance with an exemplary embodiment of the invention.

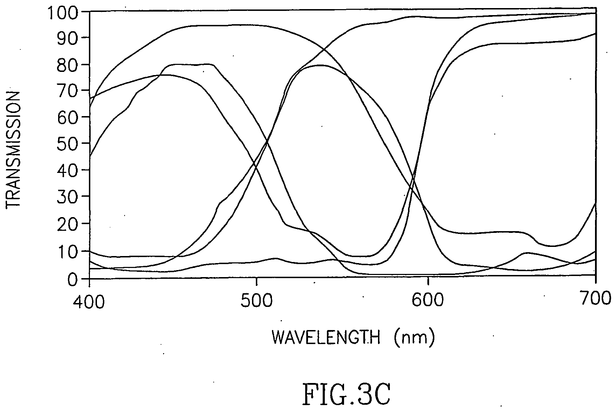

According to embodiments of the invention, the light emitted by each single LED in LED array 212 may have a pre-defined narrow light spectrum corresponding with a pre-defined wavelength as illustrated in Fig. 3B. For example, LED spectra 301 to 307 correspond to wavelengths of two spectra of blue, a cyan spectrum, a green spectrum, a yellow spectrum, and two red spectra, respectively. According to some embodiments of the invention, a combination of LEDs having different wavelength spectra may be used to produce any desired wavelength spectra combination. A wavelength spectra combination provided by a combination of LEDs may include a wider range of relevant wavelengths corresponding to a wider range of colors, as illustrated, for example, in Fig. 3B, in comparison to the light spectrum provided by a CCFL, as illustrated, for example, in Fig. 3A. A wavelength spectra combination provided by a combination of LEDs according to embodiments of the invention may further include improved separation of wavelengths compared to the light spectrum provided by a CCFL. Therefore, using LED array 212 (Fig. 2B) as a back-illumination source, in accordance with an embodiment of the invention, may enable production of a spectra combination corresponding to a set of pre-selected narrow wavelength spectra. Thus, when used in conjunction with a corresponding array of color filers 216 (Fig. 2B), LED array 212 (Fig. 2B) may enable more refined control in reproducing a desired color gamut and/or brightness levels, as described in detail below. Fig. 3C schematically illustrates transmition curves of a six-primary filter array in accordance with an exemplary embodiment of the invention. According to embodiments of the invention, filter array 216 (Fig. 2B) may be used in conjunction with LED array 212 in order to provide a set of sub-pixels each corresponding to a different required primary color as described in detail below.

For a multi-primary display with more than three primary colors, in accordance with embodiments of the invention, an infinite number of LEDs and/or filter combinations may be selected to substantially overlap a required color gamut. Therefore, the LED and/or filter selection method of the invention may include optimizing the LED and/or filter selection according to at least one of the following requirements: establishing sufficient coverage of a desired two-dimensional color gamut, for example, the NTSC standard gamut (e.g., for wide-gamut applications) and/or a "conventional" 3-color LCD gamut (e.g., for higher brightness applications); maximizing the brightness level of a balanced white point that can be obtained from combining all the primary colors; and adjusting the relative intensities of the primary colors in accordance with a desired illumination standard, e.g., the D65 white point chromaticity standard of High Definition TV (HDTV) systems.

Embodiments of the present invention provide systems and methods of displaying color images on a display device, for example, a thin profile display device, such as a liquid crystal display (LCD) device, using an array of LEDs producing a plurality of m different wavelengths as a back-illumination source, and an array of filters providing a plurality of n primary colors, wherein m is equal to or greater than three and n is greater than three. This arrangement has several advantages in comparison, for example, to display devices using a back-illumination source including only three RGB LEDs. First, the n-primary display device including an array of m color LEDs as a backlight element, in accordance with the invention, enables expansion of the color gamut covered by the display, as described below. Second, a better match between the spectra of the LEDs and the spectra of the filters may be achieved, as described below. In this case, a maximum level of light emitted from each of the LEDs may be efficiently transferred through a corresponding color filter. Thus, the device in accordance with the invention enables a significant increase in the luminous efficiency of the display in comparison, for example, with a display using a RGB LED back-illumination source covering a similar color gamut. This feature of the invention is particularly advantageous for portable (e.g., battery-operated) display devices, because increased luminous efficiency may extend the usable time of a battery after each recharging and/or reduce the overall weight of the device by using a lighter battery.

In some multi-primary display devices in accordance with embodiments of the invention, more than three sub-pixels of different colors are used to create each pixel. In embodiments of the invention, the use of more than three different color sub-pixels, per pixel, allows for a wider color gamut and/or higher luminous efficiency. In some embodiments, the number of sub-pixels per pixel; the number and wavelength spectrum of each one of the LEDs in the LED array; and the transmittance spectrum of the different sub-pixel filters may be optimized to obtain a desired combination of a sufficiently wide color gamut and/or sufficiently high brightness, as described below.

For example, the use of an array of LEDs as a back-illumination source combined with the use of more than three primary color filters, in accordance with an embodiment of the invention, may enable expansion of the reproducible color gamut by enabling the use of filters with narrower transmission curves (e.g., narrower effective transmission ranges) for the R, G and B color filters and, thus, increasing the saturation of the R, G and B sub-pixels. To compensate for such narrower ranges, in some embodiments of the invention, broader wavelength spectrum sub-pixel filters may be used in addition to the RGB saturated colors, thus increasing the overall brightness of the display. The use of the array of LEDs as a back-illumination source, in accordance with embodiments of the invention, may allow more efficient use, as described above, of the color filter attributes to enable a wider gamut and/or a higher brightness level. In accordance with embodiments of the invention, an optimal combination of color gamut width and over-all picture brightness may be achieved, to meet the requirements of a given system, by appropriately selecting the LEDs and color filters. According to some of these embodiments, the selection may include at least two different color LEDs corresponding to one color filter in order to provide substantially one primary color. These LEDs and color filter may be selected such that the combined wavelengths of the two or more LEDs produce a viewed color effectively corresponding to a desired primary color. The transmission spectrum of the corresponding color filter may be designed to accommodate the wavelengths of the two or more LEDs.

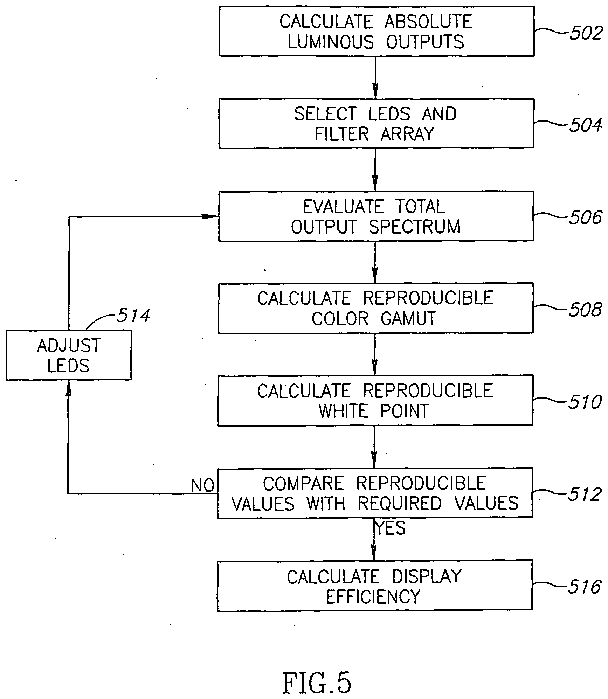

Reference is now made to Fig. 5, which schematically illustrates a block-diagram of a trial and error method for selecting a LED array and filter array, in accordance with exemplary embodiments of the invention.

According to embodiments of the invention, the LED array may include a plurality of, e.g., $l_m$, LEDs of each of m different LED colors. The LEDs may be located in the array in an arrangement that provides substantially uniform aggregated illumination of substantially white light

According to these embodiments, the trial and error method of Fig. 5 may be used for selecting an optimal number of LEDs of each color, $l_m$, and an optimal selection and arrangement of filter elements in the array of filters used in conjunction with the LEDs to achieve desired display attributes, for example, a desired color gamut and/or white point.

According to embodiments of the invention, the method of Fig. 5 may include calculating an absolute luminous spectral output, $s_m$, for each of the LED colors, as indicated at block 502. This may be performed, for example, using LED specification, e.g., normalized spectra and output (e.g., in Lumens) per unit of supplied electric power (e.g., Watt), and assuming each of the LEDs is supplied with substantially equal electrical power (Watt).

The method may also include selecting a combination of LEDs including 1m LEDs of each different color, m, and a compatible array of filter elements, as indicated at block 504.

As indicated at block 506, a total output spectrum, $T_s$, of the LED array may be evaluated, e.g., by the following equation:

$$T_s = \sum_m \left( \frac{l_m}{\sum_m l_m} s_m \right) \qquad (1)$$

As indicated at block 508, a color point of each of the primary colors may be calculated, e.g., using $T_s$ and the filter array transmission spectra. The calculated color points may be used to define a corresponding color gamut that may be reproduced using these parameters.

As indicated at block 510, a reproducible white point spectrum and reproducible white color coordinates may be calculated, e.g., as known in the art.

As indicated at block 512, the reproducible white point spectrum and coordinates and the reproducible color gamut may be compared with the required color gamut and the required white point spectrum and coordinates, respectively.

If the reproducible values substantially differ from the required values of block 512, the method may include returning to block 506 after adjusting the entry of lm accordingly. For example, if the reproducible light spectrum is "too blue", the number of blue LEDs may be reduced and/or the number of yellow LEDs may be increased, as indicated at block 514.

If the reproducible values substantially match the required values, the method may include calculating the display efficiency, $D_{eff}$, as indicated at block 516.

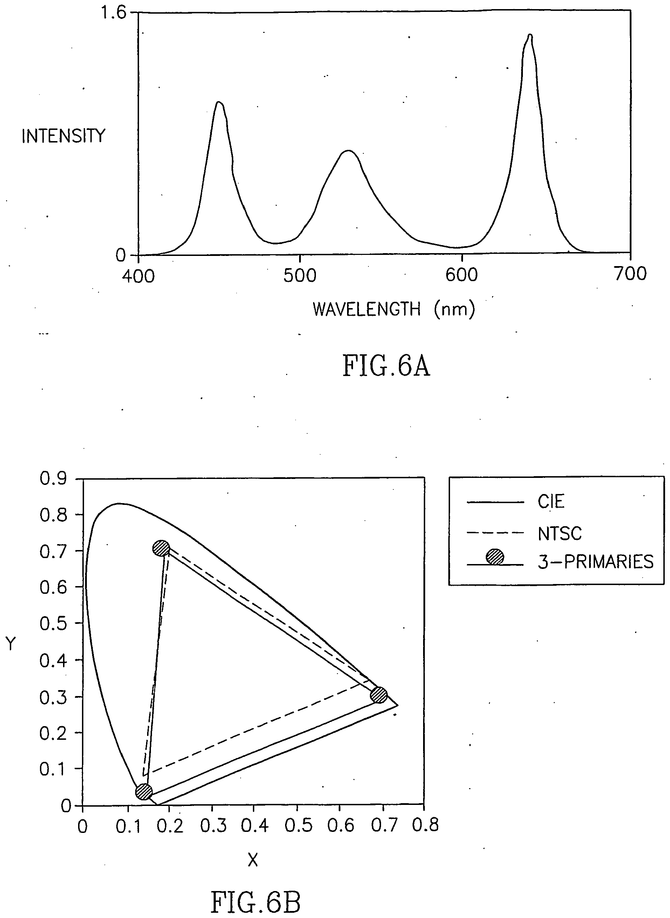

Fig. 6A schematically illustrates an effective spectrum of a prior art back-illumination source including a combination of blue, green and red LEDs, having wavelength spectra 301, 304 and 307 (Fig. 3B), respectively. The LED combination of Fig. 6A, may be used to provide a color gamut as illustrated schematically in Fig. 6B.

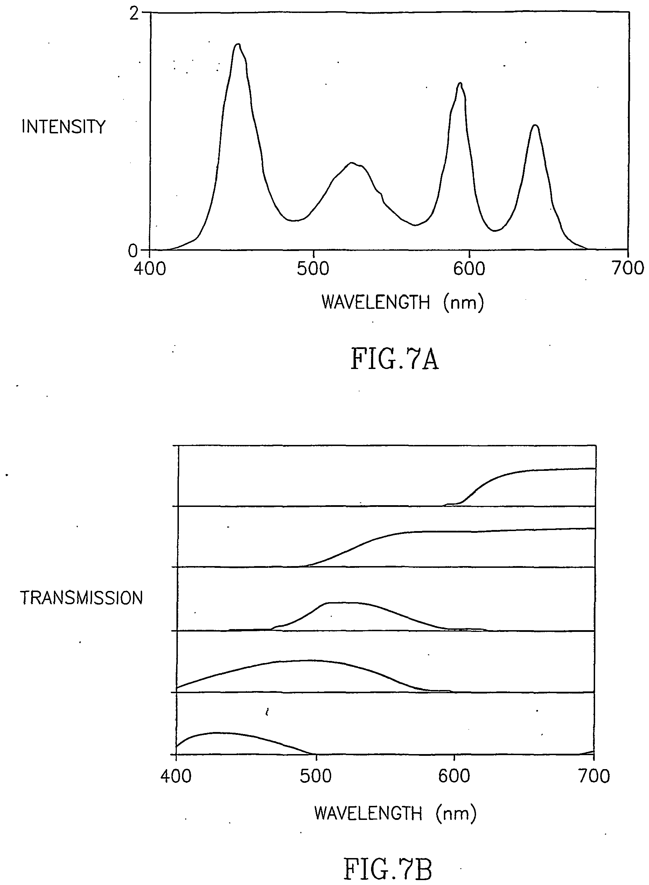

Fig. 7A is a schematic illustration of a combined spectrum of a back-illumination source having a combination of LEDs including two shades of blue LEDs, a cyan LED, a green LED, a yellow LED, and a red spectrum LED, having wavelength spectra 301, 302, 303, 304, 305 and 307 (Fig. 3B), respectively, in accordance with exemplary embodiments of the invention.

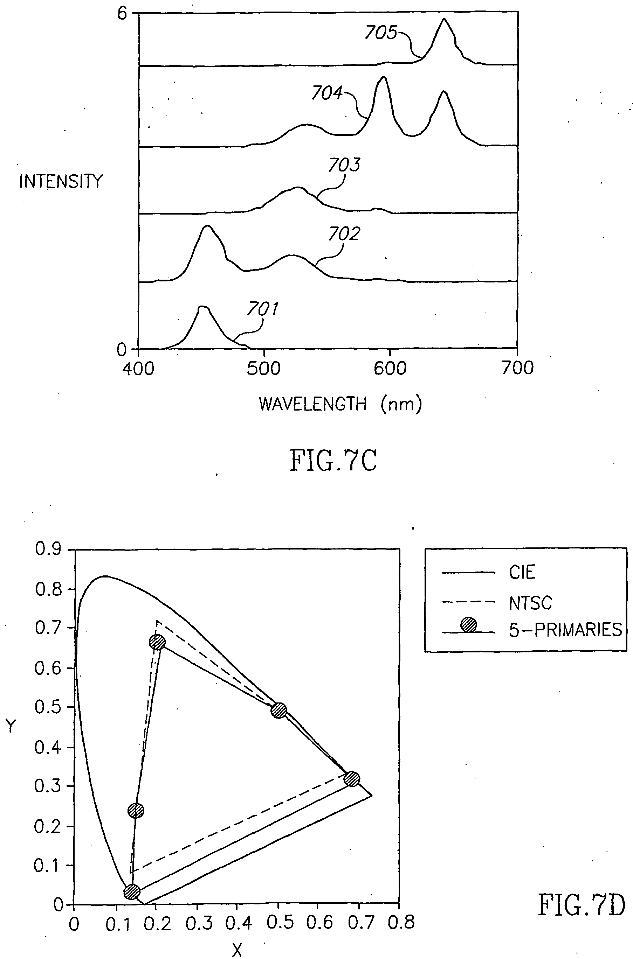

Fig. 7B is a schematic graph illustrating transmition curves of a filter array used in conjunction with the LED combination of Fig. 7A to provide a five-primary display, in accordance with an exemplary embodiment of the invention; In accordance with an embodiment of the invention, the LED combination of Fig. 7A may be used in conjunction with the filter array of Fig. 7B, to create a five primary RGBCY display. According to embodiments of the invention, the back-illumination of Fig. 7A may be used in conjunction with the filter array of Fig. 7B, to create a sub-pixel spectrum as schematically illustrated in Fig. 7C. The sub-pixel spectrum illustrated in Fig. 7C may include a blue sub-pixel spectrum 701, a cyan sub-pixel spectrum 702, a green sub-pixel spectrum 703, a yellow sub-pixel spectrum 704, and a red sub-pixel spectrum 705.

According to an embodiment of the invention, the LED combination of Fig. 7A in conjunction with the filter array of Fig. 7B, may provide a color gamut as illustrated schematically in Fig. 7D. As known in the art, the normalized over-all brightness level of a conventional 3-color LCD may be calculated as follows:

$$Y(\text{3-colors}) = (Y(\text{color}_1) + Y(\text{color}_2) + Y(\text{color}_3)) \, / \, 3 \qquad (2)$$

Analogously, the normalized brightness level of a 5-color LCD device in accordance with an embodiment of the present invention may be calculated as follows:

$$Y(\text{5-colors}) = (Y(\text{color}_1) + Y(\text{color}_2) + Y(\text{color}_3) + Y(\text{color}_4) + Y(\text{color}_5) \,)/5 \qquad (3)$$

wherein $Y(\text{color}_i)$ denotes the brightness level of the i'th primary color for a constant input electrical power (e.g., constant current), for example, according to the LEDs manufacturer's specification, and $Y(\text{n-colors})$ denotes the over-all, normalized, brightness level of the n-primaries display.

Each one of the LED elements included in LED array 212 (Fig. 2), according to an embodiment of the invention, may have a narrow wavelength spectrum, as described above. Therefore, the brightness level $Y(\text{color}_i)$ of each individual i'th sub-pixel may be substantially proportional to the intensity $I(\text{LED})$ of the LEDs whose wavelengths are transmitted through the filter element used to reproduce the i'th sub-pixel.

Therefore, a normalized brightness level of a three color RGB LCD with the LED array backlight of Fig. 6A may be calculated as follows:

$$Y(\text{3 LED}) = [I(\text{LED}_{\text{red}}) + I(\text{LED}_{\text{green}}) + I(\text{LED}_{\text{blue}})]/3 \qquad (4)$$

According to an embodiment of the invention, when the combination illustrated in Figs. 7A and 7B is used, the cyan filter may fully transmit the blue, cyan and green LEDs, whereas the yellow filter may fully transmit the red and yellow LEDs and partially transmit the green LED. Therefore, the normalized brightness level of a LCD device including the LED combination of Fig. 7A and the filter array of Fig. 7B may be calculated as follows:

$$Y(\text{5 LED}) = [2*I(\text{LED}_{\text{red}}) + 2.5*I(\text{LED}_{\text{green}}) + 2*I(\text{LED}_{\text{blue}}) +$$
$$+ I(\text{LED}_{\text{cyan}}) + I(\text{LED}_{\text{yellow}})]/5 \qquad (5)$$

According to exemplary embodiments of the invention, the brightness level of the LED array may be calculated, for example, by substituting the manufacturer's specification values of the LEDs included in the LED array into equation (5). Although, in some embodiments, the color gamut illustrated in Fig. 7D may be comparable to that of the corresponding 3-color LED backlight LCD device of FIG 6B, the brightness level that can be obtained using the LED combination of Fig. 7A in conjunction with the filter array of Fig. 7B is about 40% higher than that of the corresponding 3-color LED backlight LCD. The higher brightness levels achieved in this embodiment may be attributed, for example, to the addition of yellow (Y) and cyan (C) color sub-pixels, which are specifically designed to have broad transmission regions and, thus, transmit more of the LED-array back-illumination than the RGB filters.

**EP 1 654 722 B1**

**Claims**

1. A device for displaying a color image comprising:

    an illumination source (212);
    an array of attenuating elements (214), each able to selectively attenuate the light produced by said illumination source (212) according to an attenuation pattern corresponding to a gray-level representation of said color image; and
    an array of color sub-pixel filter elements (216) able to receive selectively attenuated light from said array of attenuating elements (214), each sub-pixel filter element (216) able to transmit light of one of n different primary colors, wherein n is equal to or greater than four;

    **characterized in that** the illumination source (212) comprises a plurality of light-emitting diodes (LEDs) including LEDs of m different wavelength spectra, each LED is able to produce respective light of one of said m different wavelength spectra, wherein m is equal to or greater than three, said LEDs produce light substantially simultaneously, and at least one of said n primary colors is reproducible by a combination of two or more of said m wavelength spectra, and at least one of said sub-pixel filter elements (216) is able to fully transmit substantially the entire spectrum of said two or more of said m wavelength spectra, and wherein m is different from n.

2. The device of claim 1, wherein said array of filter elements (216) is juxtaposed and corresponds to said array of attenuating elements (214) to enable each color sub-pixel filter element (216) to receive light from a corresponding one of said attenuating elements (214).

3. The device of claim 1 or claim 2 comprising driving circuitry (220) adapted to receive input data representing said color image and to selectively activate said attenuating elements (214) to produce said attenuation pattern.

4. The device of any one of claims 1 to 3, wherein said array of attenuating elements (214) comprises an array of Liquid Crystal (LC) elements.

5. The device of any one of claims 1 to 4, wherein sub-pixel filter elements (216) of two of said n different primary colors are able to fully transmit substantially the entire spectrum of at least one of said m wavelength spectra.

6. The device of any one of claims 1 to 5, wherein sub-pixel filter elements (216) of a first primary color of said n different primary colors are able to transmit light of a first, narrow spectrum, and wherein sub-pixel filter elements of a second primary color of said n different primary colors are able to transmit light of a second spectrum broader than and including said narrow spectrum.

7. The device of any one of claims 1 to 7, wherein m equals six.

8. The device of claim 8, wherein said m wavelength spectra comprise two spectra of blue, a cyan spectrum, a green spectrum, a yellow spectrum and a red spectrum.

9. The device of any one of claims 1 to 9, wherein said n primary colors comprise red, green, blue, and yellow.

10. The device of any one of claims 1 to 10, wherein n equals five.

11. The device of claim 12, wherein said n primary colors comprise red, green, blue, cyan and yellow.

12. The device of any one of claims 1 to 12 further comprising an optics unit to combine the light of said LEDs to form substantially uniform illumination of light of said n primary colors across said array of attenuating elements.

13. The device of claim 1, wherein the arrangement of said LEDs is selected to provide a substantially spatially uniform distribution of illumination of said m spectra produced by said illumination source.

14. The device of claim 1, further comprising:

    a converter to convert three-primary-color input data representing said color image into converted image data representing said color image in terms of n primary colors.

9

**15.** The device of claim 14 comprising driving circuitry adapted to receive said converted image data and to selectively activate said attenuating elements to produce said attenuation pattern correspondingly to a gray-level representation of said converted image data.

**16.** A method of displaying a color image comprising:

simultaneously activating a plurality of light-producing elements (212);
spatially selectively modulating the intensity of light produced by said light-producing elements (212) by an array of attenuating elements (214), to produce a light attenuation pattern corresponding to a gray-level representation of said color image; and
filtering the light attenuation pattern according to a predetermined spatial sub-pixel combination of n different primary colors, wherein n is equal to or greater than four, to produce a light pattern corresponding to said color image, wherein said filtering comprises passing said attenuated light through an array of color sub-pixel filter elements (216) juxtaposed and corresponding to said array of attenuating elements (214), each color sub-pixel element able to transmit light of one of said n different primary colors,

wherein the light-producing elements (212) are plurality of light-emitting diodes (LEDs) including LEDs of m different wavelength spectra, each LED able to produce respective light of one of said m different wavelength spectra, wherein m is equal to or greater than three, at least one of said n primary colors is reproducible by a combination of two or more of said m wavelength spectra and wherein at least one of said sub-pixel filter elements (216) is able to fully transmit substantially the entire spectrum of said two or more of said m wavelength spectra, and wherein m is different from n.

## Patentansprüche

**1.** Vorrichtung zum Anzeigen eines Farbbildes, umfassend:

Eine Lichtquelle (212);
Eine Anordnung Dämpfelemente (214), die jeweils in der Lage sind, das von der Lichtquelle (212) erzeugte Licht gemäß einem Dämpfmuster entsprechend einer Graustufendarstellung des Farbbildes selektiv zu dämpfen; und
Eine Anordnung farbiger Subpixel-Filterelemente (216), die in der Lage sind, das selektiv gedämpfte Licht von der Anordnung der Dämpfelemente (214) zu empfangen, wobei jedes Subpixel-Filterelement (216) jeweils in der Lage ist, Licht in einer von n verschiedenen Grundfarben zu übertragen, wobei n gleich oder größer vier ist;

**dadurch gekennzeichnet, dass** die Lichtquelle (212) eine Vielzahl lichtemittierender Dioden (LEDs) umfasst, einschließlich LEDs mit m verschiedenen Wellenlängenspektren, wobei jede LED in der Lage ist, Licht jeweils einer der m verschiedenen Wellenlängenspektren zu erzeugen, wobei m gleich oder größer drei ist, wobei die LEDs Licht im Wesentlichen gleichzeitig erzeugen und mindestens eine der n Grundfarben durch Kombination von zwei oder mehr der m Wellenlinienspektren reproduzierbar ist, wobei mindestens eines der Subpixel-Filterelemente (216) in der Lage ist, im Wesentlichen das vollständige Spektrum von 2 oder mehr der m Wellenlängenspektren ganz zu übertragen, und wobei m sich von n unterscheidet.

**2.** Vorrichtung nach Anspruch 1, wobei die Anordnung der Filterelemente (216) der Anordnung der Dämpfelemente (214) nebengestellt wird und dieser entspricht, damit jedes der farbigen Subpixel-Filterelemente (216) Licht von einem entsprechenden der Dämpfelemente (214) empfangen kann.

**3.** Vorrichtung nach Anspruch 1 oder Anspruch 2, umfassend einen Antriebsstromkreis (220), der dazu adaptiert ist, die das Farbbild darstellenden Eingangsdaten zu empfangen und die Dämpfelemente (214) selektiv zu aktivieren, um das Dämpfmuster zu erzeugen.

**4.** Vorrichtung nach Anspruch 1 bis 3, wobei die Anordnung der Dämpfelemente (214) eine Anordnung Flüssigkristallelemente (*Liquid Crystal, LC*) umfasst.

**5.** Vorrichtung nach einem der Ansprüche 1 bis 4, wobei Subpixel-Filterelemente (216) von zwei der n verschiedenen Grundfarben in der Lage sind, im Wesentlichen das gesamte Spektrum mindestens eines der m Wellenlängenspektren zu übertragen.

**6.** Vorrichtung nach einem der Ansprüche 1 bis 5, wobei Subpixel-Filterelemente (216) einer ersten Grundfarbe der n verschiedenen Grundfarben in der Lage sind, Licht eines ersten, engen Spektrums zu übertragen, und wobei Subpixel-Filterelemente einer zweiten Grundfarbe der n verschiedenen Grundfarben in der Lage sind, Licht eines zweiten Spektrums, das breiter als das erste Spektrum ist und das erste Spektrum einschließt, zu übertragen.

**7.** Vorrichtung nach einem der Ansprüche 1 bis 7, wobei m gleich sechs ist.

**8.** Vorrichtung nach Anspruch 8, wobei die Wellenlängenspektren m zwei Blauspektren, ein Cyanspektrum, ein Grünspektrum, ein Gelbspektrum und ein Rotspektrum umfassen.

**9.** Vorrichtung nach einem der Ansprüche 1 bis 9, wobei die n Grundfarben Rot, Grün, Blau und Gelb umfassen.

**10.** Vorrichtung nach einem der Ansprüche 1 bis 10, wobei n gleich fünf ist.

**11.** Vorrichtung nach Anspruch 12, wobei die n Grundfarben Rot, Grün, Blau, Cyan und Gelb umfassen.

**12.** Vorrichtung nach einem der Ansprüche 1 bis 12, ferner eine optische Einheit umfassend, um das Licht der LEDs zusammenzuführen, damit eine im Wesentlichen einheitliche Beleuchtung mit Licht der n Grundfarben über die gesamte Anordnung der Dämpfelemente hinweg gebildet wird.

**13.** Vorrichtung nach Anspruch 1, wobei die Anordnung der LEDs entsprechend gewählt wird, um eine im Wesentlichen räumlich einheitliche Beleuchtungsverteilung der m Spektren, die durch die Lichtquelle erzeugt werden, bereitzustellen.

**14.** Vorrichtung nach Anspruch 1, ferner umfassend:

Einen Wandler, um die Eingangsdaten des in drei Grundfarben dargestellten Farbbilds in konvertierte Bilddaten umzuwandeln, die das Farbbild im Sinne von n Grundfarben darstellen.

**15.** Vorrichtung nach Anspruch 14, umfassend einen Antriebsstromkreis, der dazu adaptiert ist, die umgewandelten Bilddaten zu empfangen und die Dämpfelemente selektiv zu aktivieren, um das Dämpfmuster entsprechend einer Graustufendarstellung der umgewandelten Bilddaten zu erzeugen.

**16.** Verfahren zum Anzeigen eines Farbbildes, umfassend ein:

Gleichzeitiges Aktivieren einer Vielzahl lichterzeugender Elemente (212);
Räumlich selektives Modulieren der Intensität des von den lichtproduzierenden Elementen (212) erzeugten Lichts mittels einer Anordnung von Dämpfelementen (214), um ein Lichtdämpfmuster entsprechend einer Graustufendarstellung des Farbbildes zu erzeugen; und ein
Filtern des Lichtdämpfmusters gemäß einer vorbestimmten räumlichen Subpixel-Kombination von n verschiedenen Grundfarben, wobei n gleich oder größer vier ist, um ein Lichtmuster gemäß dem Farbbild zu erzeugen, wobei das Filtern ein Durchleiten des gedämpften Lichts durch eine Anordnung farbiger Subpixel-Filterelemente (216) umfasst, die nebeneinander und entsprechend der Anordnung von Dämpfelementen angeordnet (214) sind, wobei jedes farbige Subpixel-Element in der Lage ist, Licht von einem der n verschiedenen Grundfarben zu übertragen, wobei die lichterzeugenden Elemente (212) eine Vielzahl von lichtemittierende Dioden (LEDs) sind, einschließlich LEDs von m verschiedenen Wellenlängenspektren, und wobei jede LED in der Lage ist, jeweils das Licht eines der m verschiedenen Wellenlängenspektren zu erzeugen, wobei m gleich oder größer drei ist, wobei mindestens eine der n Grundfarben mittels einer Kombination von zwei oder mehr der m Wellenlängenspektren reproduzierbar ist, und wobei mindestens eines der Subpixel-Filterelemente (216) in der Lage ist, im Wesentlichen das gesamte Spektrum der zwei oder mehr der m Wellenlängenspektren ganz zu übertragen, und wobei m sich von n unterscheidet.

**Revendications**

**1.** Dispositif d'affichage d'une image couleur comprenant :

une source d'éclairage (212) ;

un réseau d'éléments d'atténuation (214), capables chacun d'atténuer sélectivement la lumière produite par ladite source d'éclairage (212) selon un motif d'atténuation correspondant à une représentation en niveaux de gris de ladite image couleur ; et

un réseau d'éléments de filtrage de sous-pixel de couleur (216) capable de recevoir sélectivement la lumière atténuée provenant dudit réseau d'éléments d'atténuation (214), chaque élément de filtrage de sous-pixel (216) étant capable de transmettre la lumière d'une parmi n couleurs primaires différentes, dans lequel n est égal ou supérieur à quatre ;

**caractérisé en ce que** la source d'éclairage (212) comprend une pluralité de diodes électroluminescentes (DEL) comprenant des DEL de m spectres de longueur d'onde différents, chaque DEL est capable de produire une lumière respective d'un desdits m spectres de longueur d'onde différents, dans lequel m est égal ou supérieur à trois, lesdites DEL produisent de la lumière essentiellement en même temps, et au moins l'une desdites n couleurs primaires est reproductible par une combinaison de deux ou plus de deux desdits m spectres de longueurs d'onde, et au moins un desdits éléments de filtrage de sous-pixel (216) est capable de transmettre complètement le spectre entier desdits deux ou plus de deux desdits m spectres de longueurs d'onde, et dans lequel m est différent de n.

2. Dispositif selon la revendication 1, dans lequel ledit réseau d'éléments de filtrage (216) est juxtaposé et correspond audit réseau d'éléments d'atténuation (214) pour permettre à chaque élément de filtrage de sous-pixel de couleur (216) de recevoir la lumière d'un élément correspondant parmi lesdits éléments d'atténuation (214).

3. Dispositif selon la revendication 1 ou la revendication 2, comprenant un système de circuit de commande (220) conçu pour recevoir des données d'entrée représentant ladite image couleur et pour activer sélectivement lesdits éléments d'atténuation (214) pour produire ledit motif d'atténuation.

4. Dispositif selon l'une quelconque des revendications 1 à 3, dans lequel ledit réseau d'éléments d'atténuation (214) comprend un réseau d'éléments à cristaux liquides (LC).

5. Dispositif selon l'une quelconque des revendications 1 à 4, dans lequel les éléments de filtrage de sous-pixel (216) de deux desdites n couleurs primaires différentes sont capables de transmettre complètement sensiblement le spectre entier d'au moins un desdits m spectres de longueurs d'onde.

6. Dispositif selon l'une quelconque des revendications 1 à 5, dans lequel les éléments de filtrage de sous-pixel (216) d'une première couleur primaire desdites n couleurs primaires différentes sont capables de transmettre la lumière d'un premier spectre étroit, et dans lequel les éléments de filtrage de sous-pixel d'une deuxième couleur primaire desdites n couleurs primaires différentes sont capables de transmettre la lumière d'un deuxième spectre plus large que, et comprenant, ledit spectre étroit.

7. Dispositif selon l'une quelconque des revendications 1 à 7, dans lequel m est égal à six.

8. Dispositif selon la revendication 8, dans lequel lesdits m spectres de longueurs d'onde comprennent deux spectres de bleu, un spectre cyan, un spectre vert, un spectre jaune et un spectre rouge.

9. Dispositif selon l'une quelconque des revendications 1 à 9, dans lequel lesdites n couleurs primaires comprennent rouge, vert, bleu et jaune.

10. Dispositif selon l'une quelconque des revendications 1 à 10, dans lequel n est égal à cinq.

11. Dispositif selon la revendication 12, dans lequel lesdites n couleurs primaires comprennent rouge, vert, bleu, cyan et jaune.

12. Dispositif selon l'une quelconque des revendications 1 à 12, comprenant en outre une unité optique pour combiner la lumière desdites DEL pour former un éclairage essentiellement uniforme de la lumière desdites n couleurs primaires à travers ledit réseau d'éléments d'atténuation.

13. Dispositif selon la revendication 1, dans lequel l'agencement desdites DEL est sélectionné pour fournir une distribution sensiblement uniforme dans l'espace de l'éclairage desdits m spectres produits par ladite source d'éclairage.

14. Dispositif selon la revendication 1, comprenant en outre :

un convertisseur pour convertir des données d'entrée en trois couleurs primaires représentant ladite image couleur en données image converties représentant ladite image couleur en termes de n couleurs primaires.

15. Dispositif selon la revendication 14, comprenant un système de circuit de commande conçu pour recevoir lesdites données image converties et pour activer sélectivement lesdits éléments d'atténuation pour produire ledit motif d'atténuation en correspondance avec une représentation en niveaux de gris desdites données image converties.

16. Procédé d'affichage d'une image couleur comprenant :

l'activation simultanée d'une pluralité d'éléments producteurs de lumière (212) ;
la modulation sélective dans l'espace de l'intensité de la lumière produite par lesdits éléments producteurs de lumière (212) par un réseau d'éléments d'atténuation (214), pour produire un motif d'atténuation de lumière correspondant à une représentation en niveaux de gris de ladite image couleur ; et
le filtrage du motif d'atténuation de lumière selon une combinaison spatiale de sous-pixels prédéterminée de n couleurs primaires différentes, dans lequel n est égal ou supérieur à quatre, pour produire un motif de lumière correspondant à ladite image couleur, dans lequel ledit filtrage comprend le passage de ladite lumière atténuée à travers un réseau d'éléments de filtrage de sous-pixel de couleur (216) juxtaposé et correspondant audit réseau d'éléments d'atténuation (214), chaque élément de sous-pixel de couleur étant capable de transmettre la lumière d'une desdites n couleurs primaires différentes,

dans lequel les éléments producteurs de lumière (212) sont une pluralité de diodes électroluminescentes (DEL) comprenant des DEL de m spectres de longueur d'onde différents, chaque DEL étant capable de produire une lumière respective d'un desdits m spectres de longueur d'onde différents, dans lequel m est égal ou supérieur à trois, au moins une desdites n couleurs primaires est reproductible par une combinaison de deux ou plus de deux desdits m spectres de longueurs d'onde et dans lequel au moins l'un parmi lesdits éléments de filtrage de sous-pixel (216) est capable de transmettre complètement le spectre entier desdits deux ou plus de deux desdits m spectres de longueurs d'onde, et dans lequel m est différent de n.

FIG.1
PRIOR ART

INPUT DATA
(RGB,YCC) → TFT MATRIX CONTROLLER _208 → DRIVERS _210

_206

_204

_202

FIG.2A
PRIOR ART

INPUT DATA
(RGB,YCC) → N-PRIMARIES CONTROLLER _218 → DRIVERS _220

_216

_214

_222

_212

FIG.2B

FIG.3A
PRIOR ART

FIG.3B

FIG.3C

FIG.4A
PRIOR ART

FIG.4B
PRIOR ART

```
┌─────────────────────────┐
│   CALCULATE ABSOLUTE    │──502
│    LUMINOUS OUTPUTS     │
└─────────────────────────┘
            │
            ▼
┌─────────────────────────┐
│      SELECT LEDS AND    │──504
│       FILTER ARRAY      │
└─────────────────────────┘
            │
            ▼
┌─────────────────────────┐
│      EVALUATE TOTAL     │──506
│     OUTPUT SPECTRUM     │
└─────────────────────────┘
            │
            ▼
┌─────────────────────────┐
│  CALCULATE REPRODUCIBLE │──508
│       COLOR GAMUT       │
└─────────────────────────┘
            │
            ▼
┌─────────────────────────┐
│  CALCULATE REPRODUCIBLE │──510
│       WHITE POINT       │
└─────────────────────────┘
            │
            ▼
┌─────────────────────────┐
│  COMPARE REPRODUCIBLE   │──512
│ VALUES WITH REQUIRED VALUES │
└─────────────────────────┘
            │ YES
            ▼
┌─────────────────────────┐
│    CALCULATE DISPLAY    │──516
│       EFFICIENCY        │
└─────────────────────────┘
```

ADJUST
LEDS ──514

NO

FIG.5

FIG.6A

FIG.6B

FIG.7A

FIG.7B

FIG.7C

FIG.7D

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 02101644 A2
- IL 0200452 W
- WO 02101644 A
- IL 0300307 W
- WO 03088203 A
- IL 0100527 W
- WO 0195544 A